# DEMANDE DE BREVET EUROPEEN

(11) **EP 0 755 905 A1**
(43) Date de publication de la demande: **29.01.1997**
(21) Numéro de dépôt: 96201125.0
(22) Date de dépôt: 25.04.1996
(51) Int. Cl.: C05F 17/00, C05F 17/02

(54) **Installation et processus pour la production d'énergie et de fertilisants à partir de biomasses liquides et solides**

(30) Priorité: 03.05.1995 IT TO950352
(71) Demandeur: Bertolotto, Antonio, 12010 Vignolo (CN) (IT)
(72) Inventeur: Bertolotto, Antonio, 12010 Vignolo (CN) (IT)

(57) **Abrégé**

Une installation pour la production d'énergie et de fertilisants à partir de biomasses liquides et solides dans laquelle il est possible, dans chacun des modules qui la composent, d'effectuer aussi bien la phase aérobie que la phase anaérobie que le déssèchement primaire grâce à l'apport de chaleur. Elle comprend en outre des moyens pour le recyclage du percolat ou de tout autre liquide organique ou d'eau sans génèrer de manutention de materiau pendant la phase anaérobie tandis que des moyens de retournement interviennent pendant la phase aérobie.

## Description

La présente invention se réfère à une installation et au processus correspondant destiné à la valorisation de la fraction humide des ordures solides ménagères et organiques en général à travers la fermentation combinée anaérobie-aérobie.

Le processus de compostage anaérobie-aérobie est une technique bien connue (voir par exemple les expériences des processus DRANCO et VALORGA) et il a été appliqué à des installations pilote et à échelle réelle mais seulement pour des périodes brèves dues à des difficultés opérationnelles.

En général pour ces installations, les deux phases, anaérobie et aérobie, se déroulent dans des lieux physiquement séparés. Dans la phase anaérobie, le matériau est généralement manutentionné et des contrôles de température sophistiqués sont effectués; souvent la biomasse est entassée dans des digesteurs métalliques à chargement et déchargement manuel ou automatique.

Ces systèmes se sont avérés efficaces quant à la productivité de biogaz par tonne de déchets mais inapplicables à échelle industrielle aussi bien à cause des difficultés opérationnelles que pour les coûts très élevés d'investissement et de gestion.

La nouveauté du brevet en question réside en la simplicité de l'installation, dans les coûts très bas de construction et de gestion de celle-ci même s'il s'agit de grosses quantités de biomasses à traiter par jour, et dans l'exécution des phases anaérobie et aérobie en un seul module digesteur de façon à éviter les phases compliquées de transport du matériau et, enfin, dans la modularité d'emploi des digesteurs prévus pour des quantités de biomasses produites en plusieurs jours. Plus particulièrement, pendant la phase anaérobie, le matériau n'est pas manutentionné car on intervient sur les déchets uniquement avec l'apport de chaleur et avec le recyclage du percolat alors qu'en phase aérobie, on intervient sur les déchets exclusivement par retournement. En outre, les modules digesteurs étant en béton armé et exclusivement constitués de couloirs parallèles indépendants, dégagés les uns des autres et fonctionnant en discontinu, il n'y a aucun risque de réinfestation des biomasses pendant le retournement des déchets.

Le but du présent brevet d'invention est donc de réaliser une installation pour le traitement d' ordures ménagères solides (OMS), d'ordures assimilées solides (OAS) et de fractions humides desdites ordures et plus particulièrement du matériau à matrice essentiellement organique, provenant de la présélection desdites ordures solides, d'usages spécifiques ou d'un ramassage différencié en amont pour parvenir, avec des coûts peu élevés d'investissement et de gestion, à la production d'énergie par le biogaz qui s'est développé pendant le processus de fermentation anaérobie et d'amendement organique terminé avec le processus aérobie, en contrôlant la consommation du carbone en phase anaérobie des biomasses provenant des ordures ménagères, afin de permettre une gazéification à haute température (1200 - 1800 degrés centigrades) au cas où elles s'avèreraient polluées et inutilisables dans l'agriculture. Plus particulièrement, pendant la phase anaérobie, on obtient artificiellement les conditions permettant aux substances organiques de subir un processus de dégradation qui conduit à la formation de biogaz grâce à une structure qui est fermée juste après l'apport des biomasses et ce grâce à un système d'humidification et à une installation thermique pour le chauffage des biomasses jusqu'à une température de 60 - 70 degrés centigrades. Au contraire, pendant la phase aérobie, le matériau résultant de la dégradation anaérobie qui est déjà stabilisée et dépourvue de germes patogènes, subit un processus de stabilisation et d'humidification pour assurer l'élimination des odeurs et la transformation des substances n'ayant pas subi le processus de biogazéification.

Le présent brevet d'invention se réfère également au procédé qui permet de produire cette énergie et d'obtenir de l'amendement organique à employer dans l'agriculture, s'il provient de biomasses de bonne qualité, ou à envoyer à la gazéification, avec la production d'une énergie ultérieure, s'il provient de la substance humide des ordures ménagères solides.

L'installation en objet sera décrite et illustrée ci-après, à titre d'exemple non limitatif: une installation prévue pour traiter 100 t/jour de fraction humide pour une période de remplissage des réacteurs ou digesteurs de deux jours et en référence aux schémas ci-joints.

La figure 1 représente la vue en section d'un module digesteur selon l'invention.

Les figures 2, 3 et 4 sont des vues de détails de la figure 1.

La figure 5 représente la vue schématique de deux modules digesteurs dans deux différentes phases opérationnelles.

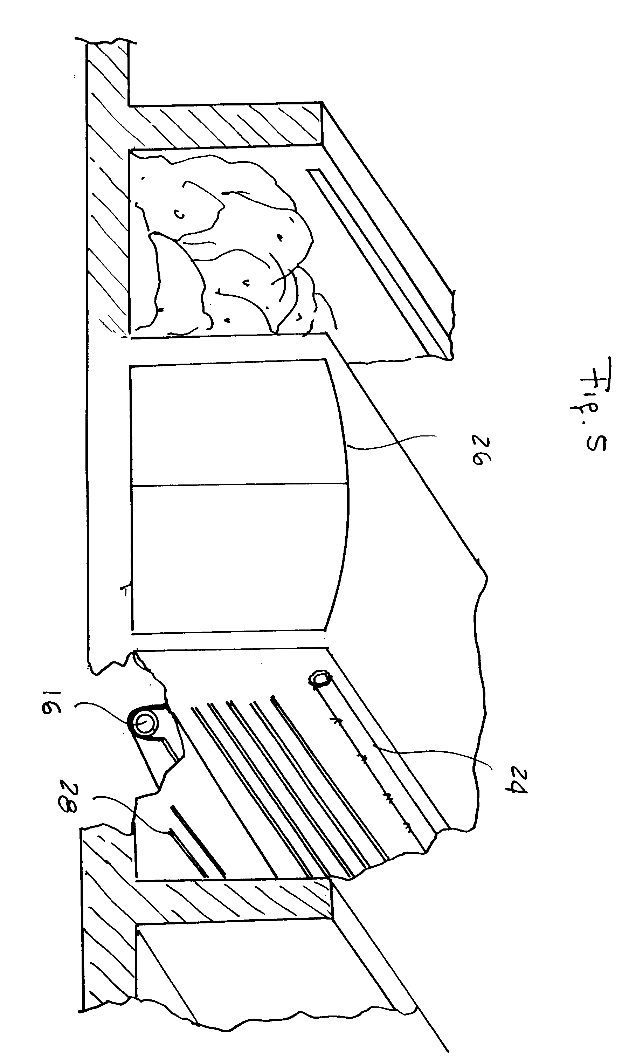

Le nombre de digesteurs est établi en fonction d'une période totale de traitement des ordures à partir de la fermeture du digesteur soit une période de 60 jours. En outre, il faut compter un module de remplissage et un module de vidage et d'entretien. Les modules digesteurs ou réacteurs, indiqués par le n°2 sont entièrement réalisés en béton armé et ils sont parallèles entre eux de façon à ce que chaque paroi puisse servir deux digesteurs comme le montre la figure 5.

Lesdits modules digesteurs 2 sont placés sur un ouvrage en sous-oeuvre en béton armé et en argile expansée et ils présentent des fondations en béton armé à double grillage électro-soudé 3, le tout pour réduire au maximum les dispersions thermiques. Dans l'exemple étudié, les modules digesteurs 2 présentent une longueur de 31 m. et ils sont équipés pour l'humidification et le chauffage sur une longueur de 21 m. environ. Chaque digesteur a une largeur conseillée de 4 m. et une hauteur de 3,5 m. Le chauffage de l'installation s'effectue au moyen d'une chaudière (non illustrée) pouvant être alimentée au biogaz et il est produit par eau chaude en cycle fermé. La température est contrôlée par un système de monitorage, de transmission et de réglage qui intervient en réglant le chauffage et le système d'humidification.

Pendant la phase aérobie, le retournement est effectué mécaniquement à l'aide un retourneur à la terre prévu à cet effet ou connecté aux parois des digesteurs.

L'installation est munie d'un système d'extraction et de dépuration du biogaz ainsi que de moteurs pour sa conversion en énergie électrique et/ou thermique (non illustrés).

Les digesteurs sont équipés de tous les systèmes de sécurité nécessaires tels que les brise-flamme, les gardes hydrauliques ou autres (non illustrés).

L'installation d'un gazomètre sous pression est prévue pour le stockage provisoire du biogaz ainsi que celle d'une torche pour brûler le biogaz en cas d'urgence.

Afin d'éviter toute exhalation malodorante, les digesteurs prévoient un système d'aspiration des airs de processus à actionner pendant la phase aérobie: l'air sera aspiré par le bas dans la cannelure 14 et introduit dans le digesteur qui se trouve dans la phase finale du processus et qui fait office de biofiltre ou dans un biofiltre prévu à cet effet.

En outre, les digesteurs ainsi construits permettent, toujours à l'aide de la cannelure 14, de dessécher le compost dans la dernière période de la phase aérobie à travers l'aspiration forcée et continue ou par insufflation d'air chaud et sec.

Dans la réalisation pratique fournie à titre d'exemple, à partir desdits modules digesteurs en béton armé 2 on obtient, aussi bien sur le sol 4 que sur les parois 6, les emplacements 8 pour les tuyaux de chauffage 10. Ces emplacements sont prévus de façon à éviter toute lésion des tuyaux par les machines opératrices qui accèdent à l'intérieur des digesteurs.

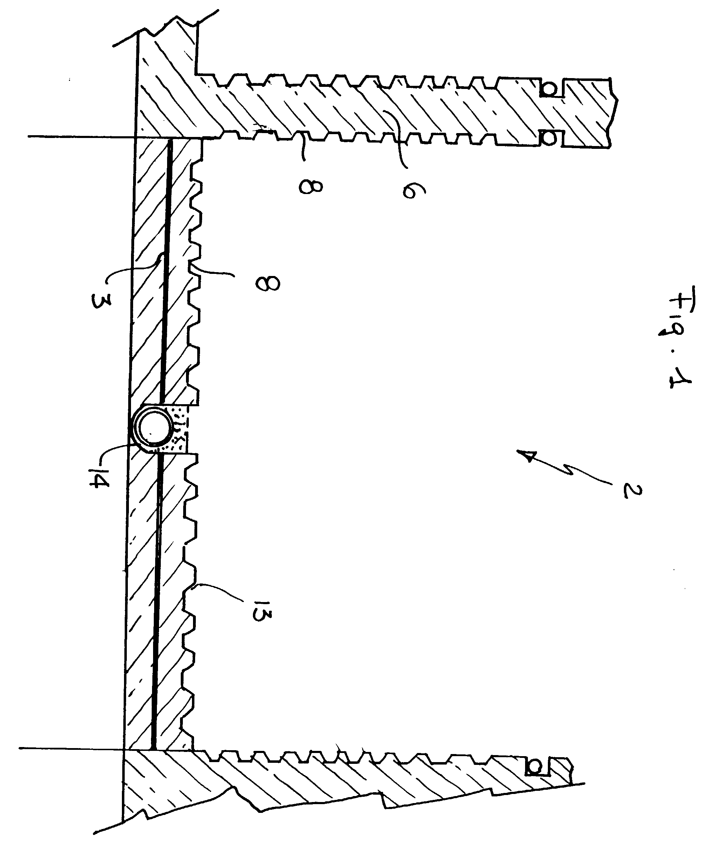

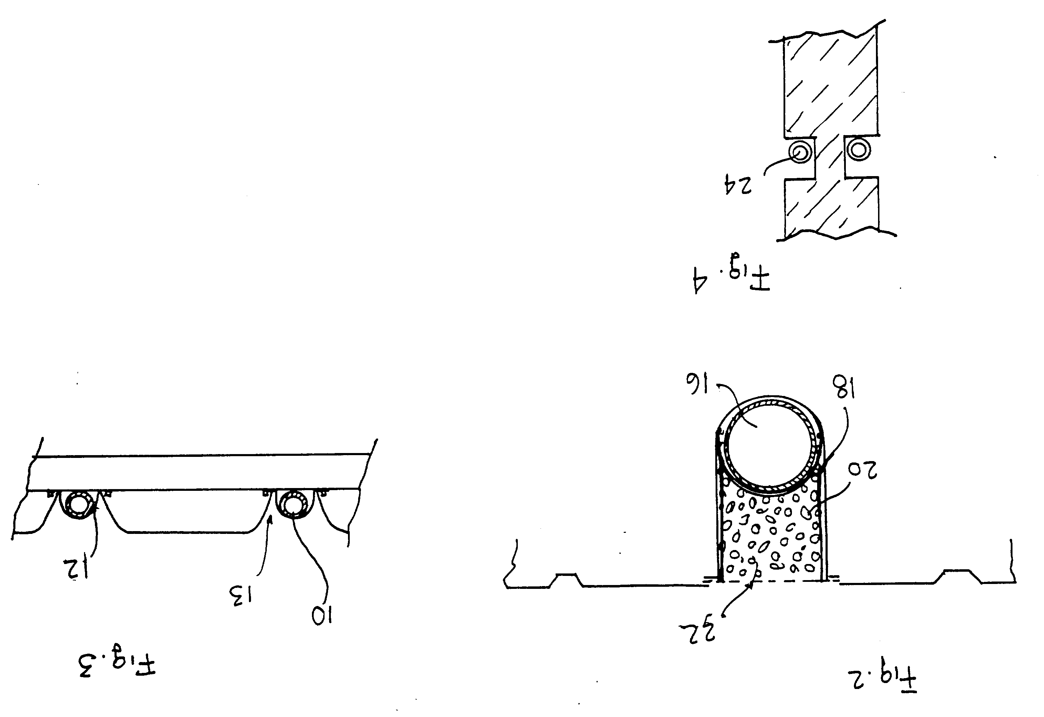

Les tuyaux sont ancrés au sol au moyen de poutres en fer 12 introduites dans le façonnage du sol 13 comme l'illustre la figure 3. Une cannelure 14 est centralement obtenue à partir du fond du digesteur, destinée à loger la tubulure 16 pour le recueil du percolat. Comme le montre plus particulièrement la figure 2, la tubulure pour le recueil du percolat 16, constituée par exemple d'un tuyau en polyéthylène fissuré de 200 mm. de diamètre, est située à l'intérieur de ladite cannelure 14 avec l'interposition d'une toile en HDPE 18 pour éviter les fuites de percolat et avec un revêtement en gravier 20 jusqu'au sol, alors que la zone est recouverte d'une grille ajourée 22. La tubulure 16 achemine le percolat dans des réservoirs, un pour chaque digesteur, d'une capacité de 280 litres environ, d'où il sera mis en recirculation dans les digesteurs au moyen d'une pompe et de deux tuyaux 24 placés sur les parois des digesteurs comme le montre la figure 4.

Le processus faisant l'objet de l'invention est effectué, comme indiqué ci-dessus, par la réalisation de la phase aérobie et de la phase anaérobie dans la même installation décrite précédemment et, de façon schématique, il se déroule selon les phases suivantes:
A) Chargement de la biomasse;
B) compactage et humidification des couches progressivement acheminées dans le digesteur;
C) inoculum des bioactifs opportunément sélectionnés;
D) fermeture du digesteur;
E) mise en marche du chauffage du digesteur avec début du monitorage de la température;
F) commencement spontané de la phase de fermentation anaérobie dans des conditions mesophiles et/ou thermophiles avec le monitorage des quantités de biogaz produit, les analyses périodiques de ce dernier, le prélèvement d'échantillons de percolat et de matériau à analyser, l'humidification avec des biomasses liquides et le recyclage du percolat;
G) interruption du chauffage;
H) démarrage du processus aérobie par l'insufflation forcée d'air par le haut et l'aspiration par le fond et par la dépuration d'air au biofiltre;
I) ouverture du digesteur;
J) retournement du matériau dans les temps programmés;
K) stabilisation aérobie spontanée avec contrôle de la température;
L) dessèchement de la biomasse (compost) toujours par aspiration par le sol ou par insufflation d'air chaud et sec par le sol;
M) obtention de l'amendement (ou compost) qui est analysé et envoyé à l'utilisation ou à un gazogène pour une ultérieure production d'énergie.

La fraction humide présélectionnée arrivant à l'installation est acheminée dans un point de recueil duquel elle est prélevée par des moyens qui la conduisent directement dans les digesteurs et qui veillent au compactage (point A). Dans le cas décrit, les digesteurs sont prévus pour recevoir 200 t (100 t par jour pendant deux jours) de biomasse. Au terme de l'acheminement, les digesteurs ou réacteurs sont opportunément fermés au moyen des toiles 26 de la figure 5 et l'on fait partir la gestion automatique de la phase anaérobique. Pendant trente jours environ de digestion, aucune intervention n'est nécessaire à l'exception du contrôle des paramètres et des témoins lumineux situès sur le tableau de contrôle (non illustré).

L'humidification mentionnée au point B se produit au moyen desdits tuyaux 24 avec l'utilisation d'eau ou d'eaux usées dépourvues de destination dépurative et stockées dans un réservoir prévu à cet effet (non illustré).

La chaleur nécessaire au chauffage des digesteurs pendant la phase anaérobie (point E) est fournie par l'installation de cogénération qui exploite le biogaz produit au cours de la digestion anaérobie.

Le vecteur thermique est l'eau. Chaque digesteur est chauffé de façon autonome à travers l'eau acheminée par des tuyaux prévus à cet effet indiqués par le n° 28 dans la figure 5 et réalisés en acier inoxydable.

Au terme de la phase anaérobie, on procède à l'insufflage d'air par le haut et à l'aspiration par le bas à travers la tubulure 16. On déconnecte enfin la gestion automatique des digesteurs qui sont ouverts et le système d'aspiration des airs est immédiatement activé. En outre, le premier retournement de la masse se produit au moyen de la machine retourneuse prévue à cet effet (points G, H, I, J). Le processus s'effectue selon les paramètres suivants:

Pendant la phase anaérobie:
1) Humidification : le matériau est porté à une humidité de 60% environ. Pendant le processus, outre effectuer le recyclage du percolat, on procède à l'humidification à l'aide d'eaux usées organiques non polluantes de manière à maintenir l'humidité idéale qui oscille de 50% à 70%.
2) Compactage : au moment de l'acheminement du matériau, on procède au compactage artificiel des déchets afin de minimiser les temps de production du biogaz et pour rendre le potentiel de l'installation maximal, obtenant ainsi une densité finale de 0,8 t/m³ environ.
3) Température : maintenue entre 35 et 75 degrés centigrades.
4) Temps de digestion : matériau maintenu dans des conditions anaérobiques pendant 25-30 jours.
5) Production de biogaz : une production minimum de 150 - 350 Nm³/t est garantie. En fonction du matériau traité, il est possible d'atteindre des productions de 1000 Nm³/t.
6) Production d'énergie électrique et thermique : à partir de 1 Nm³ de biogaz contenant environ 55% de méthane on obtient 1,8 kW-he et 3 kW-ht.
   Pendant la phase aérobie:
   Le contrôle de la température n'est pas effectué tandis que le retournement mécanique se produit tous les trois jours. La durée prévue est de 15 jours environ et l'on obtient, au terme de cette phase, un quantité d'amendement (compost) approximativement égale à 50% du poids du matériau en entrée.
7) Dans le cas de bimasses provenant d'ordures ménagères, dont la transformation en amendement comporte des difficultés d'emploi dans l'agriculture, le processus anaérobie sera géré en mesurant la consommation de carbone au point de laisser à la biomasse digérée un bon résidu au pouvoir énergétique, à exploiter par la suite par gazéification à 800 - 1800 degrés.

Cette gazéification se produit avant tout avec une biomasse ayant une humidité allant de 30% à 40% et un poids/volume réduit de 30%. Ces réductions justifient la gazéification en aval du processus de digestion anaérobie. En outre, la gazéification donnera une ultérieure réduction des coûts pour l'élimination dans la décharge. L'énergie électrique et thermique produisible par la gazéification finale sera suffisante pour auto-alimenter le système de gazéification et les autres utilisations.

## Revendications

1. Installation pour la production d'énergie et de fertilisants à partir de biomasses liquides et solides, en particulier à partir de la fraction humide des ordures ménagères et organiques solides, généralement par la fermentation combinée, anaérobie-aérobie desdites biomasses, caractérisée par le fait de prévoir n'importe quel nombre de modules digesteurs (2) pour la réalisation, dans chacun desdits modules, aussi bien de la phase anaérobie que de la phase aérobie ou de la phase de dessèchement primaire, lesdits modules étant équipés de moyens pour l'apport de chaleur, de moyens pour le recyclage du percolat ou d'un autre liquide organique ou d'eau, sans générer de manutention de matériau et de moyens de retournement destinés à intervenir pendant la phase aérobie.

2. Installation selon la revendication 1 caractérisée par le fait que lesdits modules digesteurs (2) en béton armé, acier, bois et autre matériau, sont parallèles les uns des autres de façon à ce que chaque paroi puisse servir deux digesteurs.

3. Installation selon la revendication 1 caractérisée par le fait que lesdits modules digesteurs en béton armé (2) sont placés sur un ouvrage en sous-oeuvre en béton armé et en argile expansée et qu'ils présentent des fondations en béton armé à double grillage électro-soudé (3) pour réduire les dispersions thermiques.

4. Installation selon la revendication 1 caractérisée par le fait que le chauffage de chaque digesteur (2) s'effectue au moyen d'une chaudière pouvant être alimentée au biogaz auto-produit et qu'il a lieu grâce à l'eau chaude en cycle fermé passant dans des tuyaux (10) situés dans des emplacements (8) obtenus aussi bien à partir du sol (4) que des parois (6).

5. Installation selon la revendication 1 caractérisée par le fait que lesdits tuyaux de chauffage (10) sont ancrés au sol au moyen de poutres en fer (12) introduites dans les façonnages du sol prévus à cet effet (13) pour éviter leur endommagement par les machines opératrices.

6. Installation selon la revendication 1 caractérisée par le fait qu' une cannelure (14) est centralement obtenue à partir du fond de chaque digesteur, destinée à loger la tubulure (16) pour le recueil du percolat, pour capter le biogaz, pour aspirer l'air pendant la phase aérobie et la phase finale de dessèchement et pour canaliser le condensat de l'eau causé par la fuite de celle-ci, due au dessèchement de la biomasse.

7. Installation selon la revendication 1 caractérisée par le fait que la tubulure pour le recueil du percolat (16) est protégée par une toile en HDPE (18) pour éviter toute frite de percolat, par une couverture en gravier (20) jusqu'au sol et par une grille ajourée (22).

8. Installation selon la revendication 1 ou 7 caractérisée par le fait qu' une pompe et deux tuyaux (24) placés sur les parois des digesteurs permettent la recirculation du percolat acheminé au moyen des tuyaux de recueil (16) à l'intérieur des digesteurs (2).

9. Installation selon la revendication 1 caractérisée par le fait que pendant la phase aérobie, afin d'éviter toute exhalation malodorante, un système d'aspiration des airs de processus aspire l'air par le bas dans la cannelure centrale (14) pour l'introduire dans le digesteur qui se trouve en phase finale du processus et qui fait office de biofiltre ou dans un biofiltre prévu à cet effet.

10. Installation selon la revendication 1 caractérisée par le fait que ledit retourneur qui est en fonction pendant la phase aérobie est mécanique et positionné à la terre ou connecté aux parois des digesteurs.

11. Processus pour la production d'énergie et de fertilisants à partir de biomasses liquides et solides caractérisé par le fait qu'il est réalisé aussi bien en phase anaérobie qu'en phase aérobie dans la même installation de revendication 1.

12. Processus selon la revendication 11 caractérisé par le fait qu'il comprend les phases suivantes:
- chargement de la biomasse;
- compactage et humidification des couches progressivement introduites dans le digesteur utilisé;
- inoculum des bioactivateurs opportunément sélectionnés;
- fermeture du digesteur;
- mise en marche du chauffage du digesteur avec début du monitorage de la température;
- commencement spontané de la phase de fermentation anaérobie dans des conditions mesophiles et/ou thermophiles avec le monitorage des quantités de biogaz produit, les analyses périodiques de ce dernier, le prélèvement d'échantillons de percolat et de matériau à analyser, l'humidification avec des biomasses liquides et le recyclage du percolat;
- interruption du chauffage;
- démarrage du processus aérobie par l'insufflation forcée d'air par le haut et l'aspiration par le fond et par la dépuration d'air au biofiltre;
- ouverture du digesteur;
- retournement du matériau dans les temps programmés;
- stabilisation aérobie spontanée avec contrôle de la température;
- obtention de l'amendement (ou compost) qui est analysé et envoyé à l'utilisation ou à un gazogène pour une ultérieure production d'énergie et pour une importante réduction du poids et du volume.

13. Processus selon les revendications 11 et 12 caractérisé par le fait que ladite fermeture des digesteurs se produit au moyen de toiles (26) à fermeture hermétique et réutilisables.

14. Processus selon la revendication 11 caractérisé par le fait que la digestion en phase anaérobie a une durée comprise entre 8 et 40 jours et de préférence comprise entre 25 et 30 jours pour les biomasses ménagères et entre 8 et 22 jours pour les bonnes biomasses.

15. Processus selon la revendication 11 caractérisé par le fait que la température en phase anaérobie est maintenue entre 55 et 60 degrés centigrades dans une première phase et entre 32 et 36 degrés et de préférence à 35 degrés dans une seconde période.

16. Processus selon la revendication 11 caractérisé par le fait de permettre le traitement jusqu'à 1.000 t par jour de biomasse avec des coûts réduits de construction et de gestion rapportés aux m/cubes traitables.

17. Processus selon la revendication 11 caractérisé par le fait que les digesteurs autonomes utilisent, pendant tous les cycles anaérobie et aérobie, les mêmes structures et en particulier ladite cannelure (14) destinée à recycler le percolat, à capter le biogaz, à aspirer l'air et/ou à insuffler de l'air chaud et sec et à capturer le condensat.
